# EUROPEAN PATENT APPLICATION

(11) **EP 2 251 252 A1**
(43) Date of publication of application: **17.11.2010**
(21) Application number: 09719632.3
(22) Date of filing: 16.02.2009
(51) Int. Cl.: B62D 65/00, B23P 19/04, B23P 19/06, B23P 21/00, B25J 9/06

(54) **DOOR REMOVING SYSTEM AND DOOR REMOVING METHOD**

(30) Priority: 10.03.2008 JP 2008060278; 10.03.2008 JP 2008060279; 10.03.2008 JP 2008060280; 10.03.2008 JP 2008060282
(71) Applicant: Honda Motor Co., Ltd., Minato-ku Tokyo 107-8556 (JP)
(72) Inventor: MIKURUBE, Atsushi, Tochigi 321-3395 (JP); SHIBAYAMA, Takao, Tochigi 321-3395 (JP); ASAMIZU, Kenichi, Tochigi 321-3395 (JP); ISHIDA, Taketo, Tochigi 321-3395 (JP); ISHIKAWA, Yoshio, Tochigi 321-3395 (JP); MAEDA, Mitsuo, Tochigi 321-3395 (JP)
(74) Representative: Rupp, Christian
(86) International application number: PCT/JP2009/052530
(87) International publication number: WO 2009/113360

(57) **Abstract**

A door removing system which occupies less space, reduces costs, and reduces cycle time. A door removing system (1) removes from an automobile body (10) a door (11) fixed to the body (10) by bolts (12). The door removing system (1) is provided with a double-arm robot (20) for holding the door (11) in the vertical direction, a single-arm robot (30) for removing the bolts (12), and a controlling device for controlling the robots. The controlling device holds the door (11) in the vertical direction by a pair of manipulators (22A, 22B) of the double-arm robot (20), removes the bolts (12) by the single-arm robot (30) with the door (11) held by the manipulators, and then transfers the door (11) by the double-arm robot (20).

## Description

### TECHNICAL FIELD

The present invention relates to a door removing system and a door removing method. More specifically, it relates to a door removing system and a door removing method for removing a door of an automobile.

### BACKGROUND ART

Conventionally, coating is performed for a body and doors temporarily fixed to the body by bolts in the manufacturing process of automobiles. Thereafter, these bolts are removed and the doors are gripped and conveyed, so that the doors are removed from the body. The body and doors are assembled on separate lines.

Herein, in a line removing the doors from the body, for example, a door removing device has been used that is provided with two first robots that are disposed on both sides of the body and include nut runners, and two second robots that are disposed on both sides of the body and grip the doors (refer to Patent Document 1). With this door removing device, the nut runners of the first robots loosen the bolts such that the connection between the doors and the body is released while the doors are opened, after which the second robots grip and convey the doors.

Herein, the second robots are single-arm robots, and each provided with a dedicated door gripping hand for gripping one door. The structure of this door gripping hand differs for models depending on the shape and structure of the door.

In addition, when the door is removed from the body, a robot arm of a first robot is controlled to make a nut runner be fitted to a bolt, after which the nut runner is driven to loosen and remove the bolt.

Herein, the maximum output torque of the nut runner is larger than the maximum tightening torque of the bolt.
Patent Document 1: Japanese Unexamined Patent Application Publication No. H9-103925

### DISCLOSURE OF THE INVENTION

### Problems to be Solved by the Invention

However, since one door is supported and conveyed by one single-arm robot, there have been problems in that, as well as the robot increasing in size and the space occupied by the robot becoming larger, the versatility of the robot declines.

In addition, since the shape and structure of a door differs for models with a line producing multiple models, there has been a problem in that a plurality of types of tools becomes necessary and the cost rises accordingly. Furthermore, there has been a problem in that since gripping tools are switched and adjusted each time the model manufactured by the production line is changed, the cycle time increases.

In addition, it may occur that the tightening torque of the bolt becomes excessive to exceed the maximum output torque of the nut runner in such cases as: The paint adhered in a gap between a bolt and a door or a body hardens when the door and the body are coated. Variation occurs in the tightening torque when the bolt is tightened by hand. Under this situation, it is not possible to loosen the bolt even if the nut runner having fitted to the bolt is driven.

In addition, it may occur that it is not possible to release the connection between the door and the body even if the bolt is loosened while the torque is controlled at the nut runner. Under this situation, it may be that the door and body are damaged if the door is separated from the body in order to convey the door.

Moreover, it may occur that this bolt is not successfully removed even if the bolt is loosened by the nut runner and the connection is released. Under this situation, it may occur that the door and body are damaged if the door is separated from the body in order to convey the door.

The present invention has an object of providing a door removing system that can reduce occupied space and cost, and shorten a cycle time.

The present invention has an object of providing a bolt removing method that allows a bolt to be removed, even if the maximum tightening torque of the bolt exceeds the maximum output torque of a nut runner.

In addition, the present invention has an object of providing a door removing system and a door removing method that can prevent the door and body from being damaged when the door is removed from the body and conveyed.

### Means for Solving the Problems

A door removing system of the present invention (e.g., a door removing system 1 described later) removes a door (e.g., a door 11 described later) fixed by bolts (e.g., bolts 12 described later) to a body (e.g., a body 10 described later) of an automobile from the body, and includes: a double-arm robot (e.g., a double-arm robot 20 described later) that holds the door from above and below; a single-arm robot (e.g., a single-arm robot 30 described later) that removes the bolts; and control means (e.g., a control device 40 described later) for performing control for the double-arm robot and the single-arm robot, in which while the control means causes a pair of manipulators (e.g., manipulators 22A and 22B described later) of the double-arm robot to hold the door from above and below, the control means causes the single-arm robot to remove the bolts, subsequently causing the double-arm robot to convey the door.

According to this invention, since one door is held by the pair of manipulators of the double-arm robot, the system can be reduced in size compared to a conventional case of gripping with a single arm. Therefore, as well as being able to reduce the occupied space of the system, the versatility of the robot can be increased.

Since the door is gripped by the double-arm robot that holds the door from above and below, it may be possible to adopt gripping tools of any structure mounted to the double-arm robot that can sandwich the door even if the shape and structure of the door differs for models. Therefore, it is possible to allow the structure of a gripping tool to be simple, whereby reducing cost. Furthermore, the number of times switching and adjusting gripping tools is reduced, and thus the cycle time can be shortened.

A door removing system (e.g., a door removing system 1 described later) of the present invention removes a door (e.g., a door 11 described later) fixed by bolts (e.g., bolts 12 described later) to a body (e.g., a body 10 described later) of an automobile from the body, and includes: a robot (e.g., a double-arm robot 20 described later) configured to grip the door and pivotable about a pivotal shaft in a substantially vertical direction (e.g., a pivotal shaft 213 described later); torque detection means (e.g., a torque sensor 214 described later) for detecting a torque acting on the pivotal shaft; and control means (e.g., a control device 40 described later) for controlling the robot, in which the control means causes the torque detection means to detect the torque acting on the pivotal shaft when the robot is rotated about the pivoting axis while the door is being gripped by the robot, and causes the robot to stop rotating for a case where the torque thus detected is equal to or greater than a predetermined value.

According to this invention, when the robot is made to pivot about the pivotal shaft while the door is gripped by the robot, the torque acting on the pivotal shaft of the robot is detected by the torque detection means. If this torque thus detected is equal to or greater than the predetermined value, the door is not released from the body, with the bolts not being removed.

According to this invention, if this torque thus detected is equal to or greater than the predetermined value, the control means causes the double-arm robot to stop pivoting such that the conveyance of the door is stopped. Accordingly, the door and body can be prevented from being damaged when the door is removed from the body and conveyed.

A door removing method of the present invention removes a door (e.g., a door 11 described later) fixed by bolts (e.g., bolts 12 described later) to a body (e.g., a body 10 described later) of an automobile from the body, and includes: a step of holding and gripping the door from above and below by way of a pair of manipulators (e.g., manipulators 22A and 22B described later) of a double-arm robot (e.g., a double-arm robot 20 described later); a step of loosening the bolts; and a step of detecting a load acting on one among the pair of manipulators that supports a lower side of the door, and conveying the door by way of the double-arm robot only for a case where the load thus detected is equal to or greater than a predetermined value.

If the detected load acting on one among the pair of manipulators that supports the lower side of the door is less than the predetermined value, the load of the door is being supported by the body, which indicates that the connection of the door and the body is not released.

Then, according to this invention, it is only if this detected load is equal to or greater than the predetermined value that the door is conveyed by the double-arm robot. Therefore, since the door is conveyed only if the connection between the door and the body has been released, the door and body can be prevented from being damaged.

In this case, the door is fixed by a pair of upper and lower bolts to the body, and it may be preferable that after the upper bolt among the pair of bolts has been loosened, the lower bolt is loosened in the step of loosing the bolts.

When the upper bolt is loosened, a portion of the weight of the door bears on the lower manipulator, and when the lower bolt is loosened, the entire weight of the door comes to bear on the lower manipulator.

With the present invention, after the upper bolt among the pair of the upper and lower bolts has been loosened, the lower bolt is loosened. Accordingly, it is possible to observe the variation with time in the load acting on the lower manipulator so as to reliably determine whether the connection between the door and the body has been released.

A bolt removing method of the present invention is for removing bolts (bolts 12 described later) installed to a work (a door 11 described later) by way of a robot (a single-arm robot 30 described later) having a robot arm (an arm 33 described later) and a nut runner (a nut runner 71 described later) mounted to an end of the robot arm. The method includes: a step of fitting a socket (a socket 711 described later) of the nut runner to a bolt; a step of causing the robot arm to rotate about the socket of the nut runner so as to loosen a tightening torque of the bolt within a higher torque range; and a step of driving the nut runner to loosen the tightening torque of the bolt within a lower torque range.

After the tightening torque of the bolt within the higher torque range has been loosened by causing the arm of the robot to rotate about the socket of the nut runner, the tightening torque of the bolt within the lower torque range is loosened by driving the nut runner. Therefore, even if the tightening torque of the bolt exceeds the maximum output torque of the nut runner, this bolt can be removed. The reason for this is that it is possible to cause the robot arm to rotate to loosen a part of the tightening torque of the bolt that exceeds the maximum output torque of the nut runner.

### Effects of the Invention

According to the present invention, since one door is held and conveyed by the pair of manipulators of the double-arm robot, the system can be reduced in size compared to a conventional case of gripping with one arm. Therefore, as well as being able to reduce the occupied space of the system, the versatility of the robot can be increased.

Since the door is gripped by the double-arm robot that holds the door from above and below, it may be possible to adopt gripping tools of any types of structure mounted to the double-arm robot that can sandwich the door even if the shape and structure of the door differs for models. Therefore, it is possible to make the gripping tool a simple structure, whereby cost can be reduced. Furthermore, the number of times switching and adjusting the gripping tools is reduced, and thus the cycle time can be shortened.

### BRIEF DESCRIPTION OF THE DRAWINGS

FIG. 1 is a perspective view of a door removing system according to an embodiment of the present invention;
FIG. 2 is a perspective view of a first gripping tool and a second gripping tool of the door removing system according to the embodiment;
FIGS. 3A and 3B are a plan view and a side view of a nut runner and a nut runner support of the door removing system according to the embodiment;
FIG. 4 is a block diagram showing a schematic configuration of control means of the door removing system according to the embodiment;
FIG. 5 is a flowchart of operations of the door removing system according to the embodiment;
FIG. 6 is a perspective view showing a state in which the first gripping tool of the door removing system according to the embodiment has latched onto the door;
FIG. 7 is a perspective view showing a state in which the door is gripped by a double-arm robot of the door removing system according to the embodiment;
FIG. 8 is a perspective view showing a state in which a bolt is being removed by a single-arm robot of the door removing system according to the embodiment;
FIG. 9 is a perspective view showing a state in which a bolt of an upper hinge member is being removed by the single-arm robot of the door removing system according to the embodiment;
FIG. 10 is a perspective view showing a state in which a bolt of a lower hinge member is being removed by the single-arm robot of the door removing system according to the embodiment; and
FIG. 11 is a perspective view showing a state in which the door is being conveyed by the double-arm robot of the door removing system according to the embodiment.

### EXPLANATION OF REFERENCE NUMERALS

1 Door removing system
10 Body
11 Door (work)
12 Bolt
20 Double-arm robot
22A First manipulator
22B Second manipulator
30 Single-arm robot
33 Arm
40 Control device (control means)
71 Nut runner
213 Pivotal axis
214 Torque sensor (torque detection means)
711 Socket

### PREFERRED MODE FOR CARRYING OUT THE INVENTION

An embodiment of the present invention will be explained hereinafter based on the drawings.

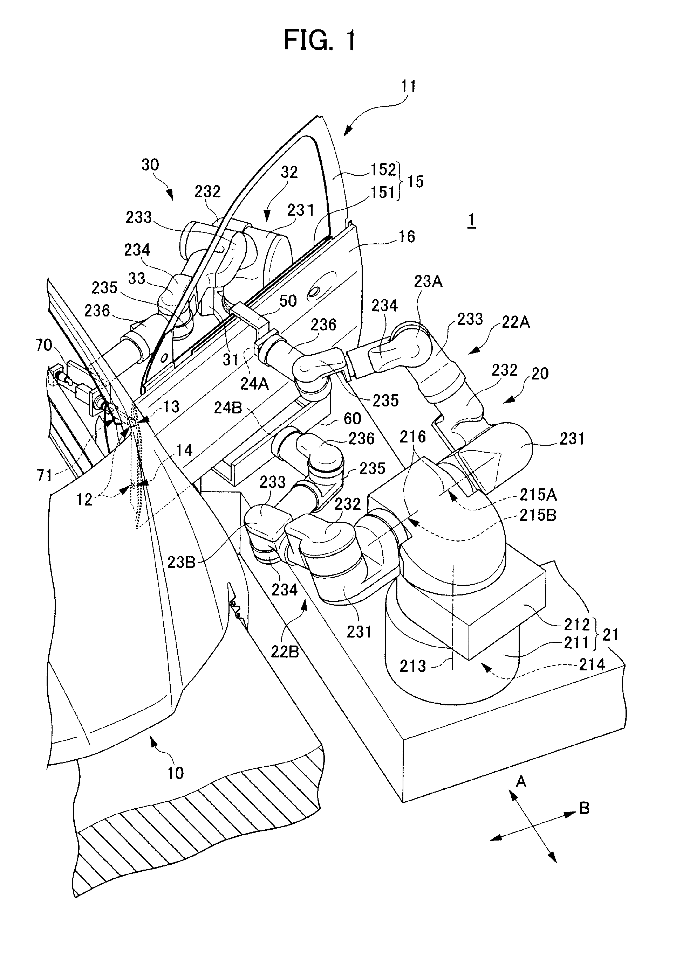

FIG. 1 is a perspective view of a door removing system 1 according to the embodiment of the present invention.

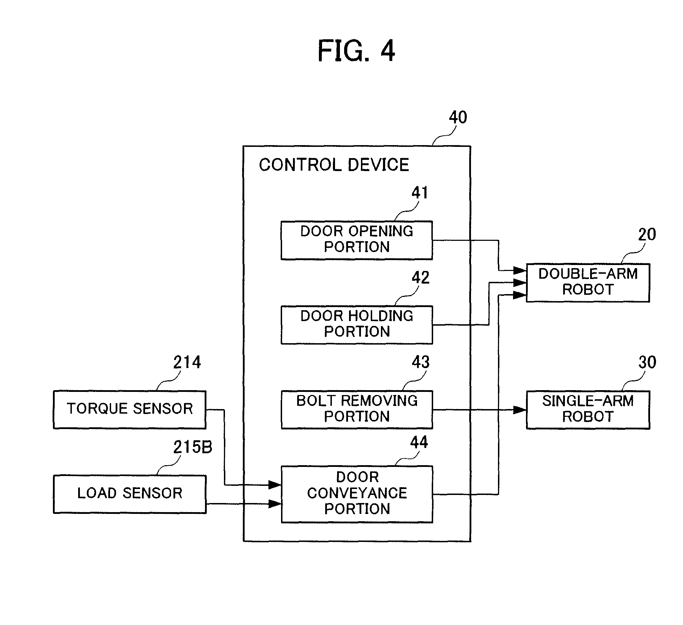

The door removing system 1 removes a door 11 as a work temporarily fixed by bolts 12 to a body 10 of an automobile from this body 10. This door removing system 1 is provided with a double-arm robot 20 that holds the door 11 from above and below, a single-arm robot 30 that removes the bolts 12, and a control device 40 as control means for controlling these robots(refer to FIG. 4).

The door 11 is mounted to the body 10 of the automobile via a pair of an upper and a lower hinge member 13 and 14.

The pair of hinge members 13 and 14 is fixed to the body 10, and each is temporarily fixed to an edge face on one end in a length direction of the door 11 by one bolt 12.

This door 11 is formed by joining an inner panel 15 with an outer panel 16.

The inner panel 15 includes a panel main body 151 of a substantially flat rectangular shape, and a frame part 152 of a substantially U-shape provided to a top edge of this panel main body 151. A region encompassed by the frame part 152 and the upper edge of the panel main body 151 makes an opening through which window glass, which is not illustrated, is exposed.

The outer panel 16 is attached to an outer side of the panel main body 151 of the inner panel 15. A gap for housing the window glass is formed between the upper edge of the outer panel 16 and the upper edge of the panel main body 151 of the inner panel 15.

The double-arm robot 20 includes a robot main body 21, and a first manipulator 22A and second manipulator 22B provided to interpose the robot main body 21.

The manipulators 22A and 22B configured to be movable about 7 axes includes arms 23A and 23B that are pivotally supported to the robot main body 21, and a first gripping tool 50 and a second gripping tool 60 that are pivotally supported to end flange surfaces 24A and 24B of these arms 23A and 23B.

The robot main body includes a sliding part 211 that allows sliding in a predetermined direction relative to a floor surface, and a pivoting part 212 that allows pivoting relative to the sliding part 211 about pivotal shaft 213 in a substantially vertical direction.

The sliding part 211 is configured to be slidable in a conveyance direction of the body 10 of the automobile, i.e. a direction indicated by an arrow A in FIG. 1 and a direction intersecting the conveyance direction of the body 10 of the automobile, i.e. a direction indicated by an arrow B in FIG. 1.

A torque sensor 214 is provided to this sliding part 211 as torque detection means for detecting the torque acting on the pivotal shaft 213. More specifically, the torque sensor 214 detects the torque acting on a rotating shaft of a motor to drive the pivotal shaft 213.

Load sensors 215A and 215B that detect the load acting in a vertical direction on the manipulators 22A and 22B are provided to the pivoting part 212.

The arms 23A and 23B each include a first arm portion 231, second arm portion 232, third arm portion 233, fourth arm portion 234, fifth arm portion 235, and sixth art portion 236 in sequence from the side of the robot main body 21.

The first arm portion 231 extends substantially linearly, and is pivotally supported to the robot main body 21. The robot main body 21 causes the first arm portion 231 to rotate about the rotating shaft 216 extending in a substantially horizontal direction as a center of rotation.

A rotating shaft 216 of the first arm portion 231 of the arm 23A, and a rotating shaft 216 of the first arm portion 231 of the arm 23B are arranged on the same straight line.

The aforementioned load sensors 215A and 215B detect torque acting on the rotating shafts of the motors driving these rotating shafts 216.

The second arm portion 232 extends substantially linearly, and is pivotally supported to the first arm portion 231. The first arm portion 231 causes the second arm portion 232 to rotate by a drive mechanism, which is not illustrated, about a direction intersecting an extending direction of the first arm 231 as a center of rotation. Accordingly, the angle formed between the extending direction of the first arm portion 231 and an extending direction of the second arm portion 232 is changeable.

The third arm portion 233 extends substantially linearly, and is pivotally supported to the second arm portion 232. The second arm portion 232 causes the third arm portion 233 to rotate by a drive mechanism, which is not illustrated, about the extending direction of the second arm portion 232 as a center of rotation.

The fourth arm portion 234 extends substantially linearly, and is pivotally supported to the third arm portion 233. The third arm portion 233 causes the fourth arm portion 234 to rotate by a drive mechanism, which is not illustrated, about a direction intersecting an extending direction of the third arm portion 233 as a center of rotation. Accordingly, the angle formed between the extending direction of the third arm portion 233 and an extending direction of the fourth arm portion 234 is changeable.

The fifth arm portion 235 extends substantially linearly, and is pivotally supported to the fourth arm portion 234. The fourth arm portion 234 causes the fifth arm portion 235 to rotate by a drive mechanism, which is not illustrated, about the extending direction of the fourth arm portion 234 as a center of rotation.

The sixth arm portion 236 extends substantially linearly, and is pivotally supported to the fifth arm portion 235. The fifth arm portion 235 causes the sixth arm portion 236 to rotate by a drive mechanism, which is not illustrated, about a direction intersecting an extending direction of the fifth arm portion 235 as a center of rotation. Accordingly, the angle formed between the extending direction of the fifth arm portion 235 and an extending direction of the sixth arm portion 236 is changeable.

The first gripping tool 50 and the second gripping tool 60 are pivotally supported to sixth arm portions 236 at the end flange surfaces 24A and 24B of the arms 23A and 23B, respectively. The sixth arm portions 236 cause the first gripping tool 50 and the second gripping tool 60 to rotate by drive mechanisms, respectively, which are not illustrated, about extending directions of the sixth arm portions 236 as centers of rotation.

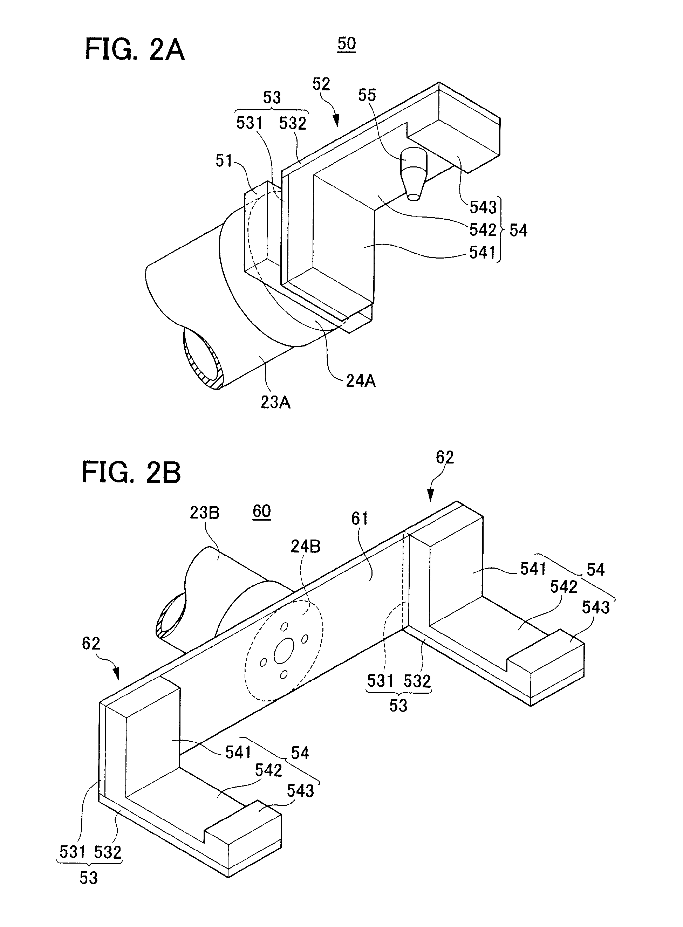

FIG. 2A is a perspective view of the first gripping tool 50.

The first gripping tool 50 includes a supporting part 51 that is mounted to the end flange surface 24A of the arm 23A, a latching part 52 of a substantially U-shape that is supported by the supporting part 51, and a laser measuring device that is not illustrated.

The latching part 52 includes a frame 53 that is mounted to the end flange surface 24A of the arm 23A, a shock-absorbing part 54 made of urethane that is provided on a surface of the frame 53, and a door opening pin 55 that is provided to the frame 53 and protrudes from the shock-absorbing part 54.

The frame 53 is substantially L-shaped, and includes a first frame 531 of a plate shape that extends substantially parallel to the end flange surface 24A, and a second frame 532 of a plate shape that is provided to an end side of the first frame 531 and extends in a substantially orthogonal direction relative to the first frame 531.

The shock-absorbing part 54 includes a first shock-absorbing portion 541 that is provided along a surface on an inner side of the first frame 531, a second shock-absorbing portion 532 that is provided along a surface on an inner side of the second frame 532, and a third shock-absorbing portion 543 that is provided on an end side of the second shock-absorbing portion 542 and extends so as to face the first shock-absorbing portion 541.

The door opening pin 55 is provided to the second frame 532, and protrudes from a surface of the second shock-absorbing portion 542.

FIG. 2B is a perspective view of the second gripping tool 60.

The second gripping tool 60 includes a supporting part 61 that is mounted to the end flange surface 24B of the arm 23B, and a pair of latching parts 62 of a substantially L-shape that are supported at both end sides of the supporting part 61 and are substantially parallel to each other.

Although the latching parts 62 each have a configuration similar to the latching part 52 of the first gripping tool 50, they are different in the aspect of not having a door opening pin.

Referring again to FIG. 1, the single-arm robot 30 includes a robot main body 31, and one manipulator 32 that is provided to the robot main body 31.

The manipulator 32 configured to be movable about 7 axes includes an arm 33 that is provided to the robot main body 31, and a nut runner 71 that is supported through a nut runner support 70 to an end of the arm 33.

The robot main body 31 and the arm 33 of the single-arm robot 30 have a configuration similar to the robot main body 31 and the arms 23A and 23B of the double-arm robot 20. However, the sliding part 211 of the single-arm robot 30 is slidable only in a direction indicated by the arrow A in FIG. 1, which differs from the sliding part 211 of the double-arm robot 20.

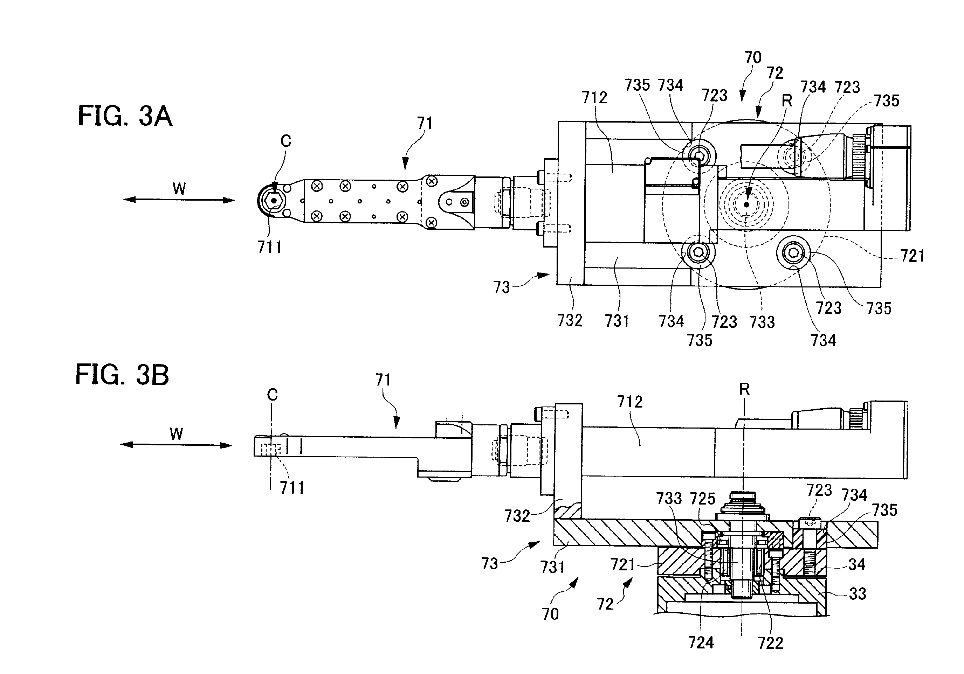

FIGS. 3A and 3B are a plan view and a side view of the nut runner 71 and the nut runner support 70.

The nut runner 71 has a socket 711 and a nut runner main body 712 that rotationally drives the socket 711.

The socket 711 is provided at an end side of the nut runner main body 712, and a rotational axis C of the socket 711 intersects with an extending direction of the nut runner main body 712.

The nut runner support 70 includes a base 72 that is mounted to an end flange surface 34 of the arm 33, and a frame 73 that is rotationally supported to the base 72 and supports the nut runner 71.

The base 72 includes a main body 721 of a disk shape that extends along the end flange surface 34, and four bolts 723 that protrude from the main body 721.

A through-hole 722 that extends along a central axis R of the end flange surface 34 is formed in the middle of the main body 721. Along the inner wall surface of the through-hole 722, a radial bearing 724 is provided, and a thrust bearing 725 is provided in the frame 73 above the through-hole 722.

The four bolts 723 are threaded to the main body 721, and are arranged in a ring shape about a shaft 733.

The frame 73 is substantially L-shaped, and includes a first frame 731 of a plate shape that extends along the end flange surface 34, a second frame 732 of a plate shape that is vertically arranged on the first frame 731, and the shaft 733 that penetrates and is fixed to the first frame 731.

Four accommodating portions 734 in which the bolts 723 of the base 72 are accommodated are formed in the first frame 731.

The shaft 733 is inserted in the through-hole 722 of the base 72, and is supported by the radial bearing 724 and the thrust bearing 725. Accordingly, the frame 73 is supported to the base 72 to be rotatable about the central axis R as a center of rotation.

A shock absorber 735 of a cylindrical shape, which is disposed to surround a neck portion of the bolt 723, is disposed on an inner wall surface of each accommodating portion 734. The shock absorber 735 is made of elastically deformable urethane, and is installed between the inner wall surface of the accommodating portion 734 and the outer circumferential surface of the neck portion of the bolt 723.

The second frame 732 supports the nut runner main body 712 so that the nut runner 71 extends along the end flange surface 34. Accordingly, the rotational axis C of the socket 711 of the nut runner 71 becomes substantially parallel to the central axis R of the end flange surface 34 of the arm 33.

The aforementioned nut runner support 70 operates as follows.

As described above, the frame 73 is rotatable relative to the base 72 about the central axis R as a center of rotation. However, since the bolts 723 of the base 72 are accommodated in the accommodating portions 734 of the frame 73, rotation relative to the base 72 of the frame 73 is restricted by the bolts 723.

Herein, a shock absorber 735 is provided between a bolt 723 and an accommodating portion 734. Accordingly, when the frame 73 is made to rotate relative to the base 72, the shock absorber 735 elastically deforms while pressed by the inner wall surface of the accommodating portion 734 and the outer circumferential surface of the neck portion of the bolt 723. In this manner, the amount of rotation relative to the base 72 of the frame 73 is equivalent to the amount of elastic deformation of shock absorbers 735.

Since the central axis C of the socket 711 of the nut runner 71 is parallel with the central axis R of the end flange surface 34, the socket 711 rotates slightly relative to the end flange surface 34 of the arm 33.

FIG. 4 is a block diagram showing a schematic configuration of a control device 40.

The control device 40 includes a door opening portion 41, a door holding portion 42, a bolt removing portion 43 and a door conveyance portion 44. The door opening portion 41 causes the manipulator 22A of the double-arm robot 20 to open the door 11. The door holding portion 42 causes the manipulators 22A and 22B of the double-arm robot 20 to hold the door 11 from above and below. The bolt removing portion 43 causes the single-arm robot 30 to remove the bolts 12. The door conveyance portion 44 causes the double-arm robot 20 to convey the door 11.

The door opening portion 41 causes the door opening pin 55 of the first gripping tool 50 of the manipulator 22A to insert into a gap between the outer panel 16 and the inner panel 15 of the door 11 and to pull the door 11 toward outside the body 10, such that the door 11 is opened.

The door holding portion 42 causes the first gripping tool 50 of the manipulator 22A and the second gripping tool 60 of the manipulator 22B to hold the door 11 from above and below. When the door 11 is held, the reactive force acting on the manipulators 22A and 22B is detected by a force sensor that is not illustrated, and the manipulators 22A and 22B are feed-back controlled based on the reactive force detected.

The bolt removing portion 43 controls the single-arm robot 30 to fit the socket of the nut runner 71 to the bolt 12 and to drive the nut runner 71 so as to remove a bolt 12. Herein, the bolt removing portion 43 controls such that an upper bolt 12 among a pair of upper and lower bolts 12 is loosened and removed, and then the lower bolt 12 is loosened and removed.

In addition, when loosening the bolt 12, the bolt removing portion 43 causes the arm 33 to rotate about the socket 711 of the nut runner 71 so as to loosen the tightening torque of the bolt 12 within a higher torque range, subsequently driving the nut runner 71 to loosen the tightening torque of the bolt 12 within a lower torque range.

The door conveyance portion 44 causes the load sensor 215B to detect the load acting on one among the pair of manipulators 22A and 22B, herein the manipulator 22B that supports the lower side of the door 11.

More specifically, while locking the rotational axes other than the rotating shaft 216 for the manipulator 22B, the door conveyance portion 44 causes the load sensor 215B to detect the torque acting on the motor driving the rotating shaft 216 of the manipulator 22B. It should be noted that although the torque acting on the rotating shaft 216 is detected by the load sensor 215B in the present embodiment, it is not limited thereto, and the torque acting on the rotating shaft 216 may be calculated based on a current value of the motor driving the rotating shaft 216.

It is only when the detected load is equal to or greater than a predetermined value that the pivoting of the pivotal shaft 213 of the robot main body 211 is started to convey the door 11 by the pair of manipulators 22A and 22B.

In addition, when causing the pivotal shaft 213 of the double-arm robot 20 to pivot, the torque acting on the pivotal shaft 213 is detected by a torque sensor 214, and the door conveyance portion 44 causes the double-arm robot 20 to stop pivoting if the detected torque is equal to or greater than a predetermined value. It should be noted that although the torque acting on the pivotal shaft 213 is detected by the torque sensor in the present embodiment, it is not limited thereto, and the torque acting on the pivotal shaft 213 may be calculated based on a current value of the motor driving the pivotal shaft 213.

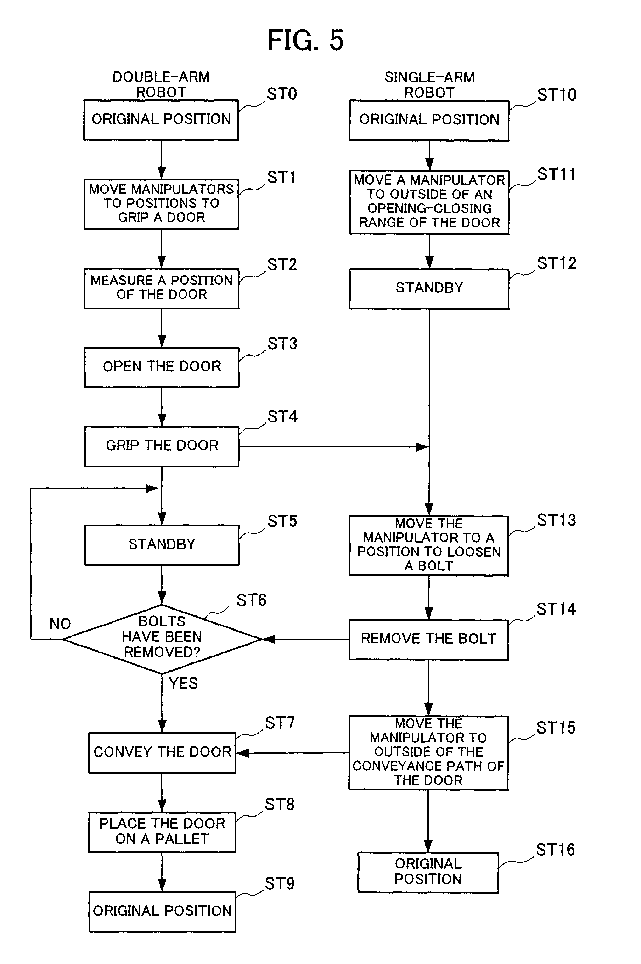

Hereinafter, operation of the door removing system 1 will be explained while referring to the flowchart of FIG. 5.

First, the body 10 is conveyed on a line, and supplied to the door removing system 1. Under this situation, the door 11 is closed.

First, in ST10, the single-arm robot 30 is positioned at an original position.

In ST11, the sliding part 211 of the single-arm robot 30 is caused to slide, the manipulator 32 is moved to outside an opening-closing range of the door 11, and in ST12, the single-arm robot 30 is made to standby.

On the other hand, in ST0, the double-arm robot 20 is positioned at an original position.

In ST1, the sliding part 211 of the double-arm robot 20 is caused to slide, such that the manipulators 22A and 22B are moved to positions to grip the door 11.

In ST2, the position of the door 11 is measured by a laser measuring device not shown that is provided to the first manipulator 22A of the double-arm robot 20.

In ST3, making corrections is performed for the operation taught in advance based on the position of the door thus measured, and the door 11 is opened by the first manipulator 22A of the double-arm robot 20.

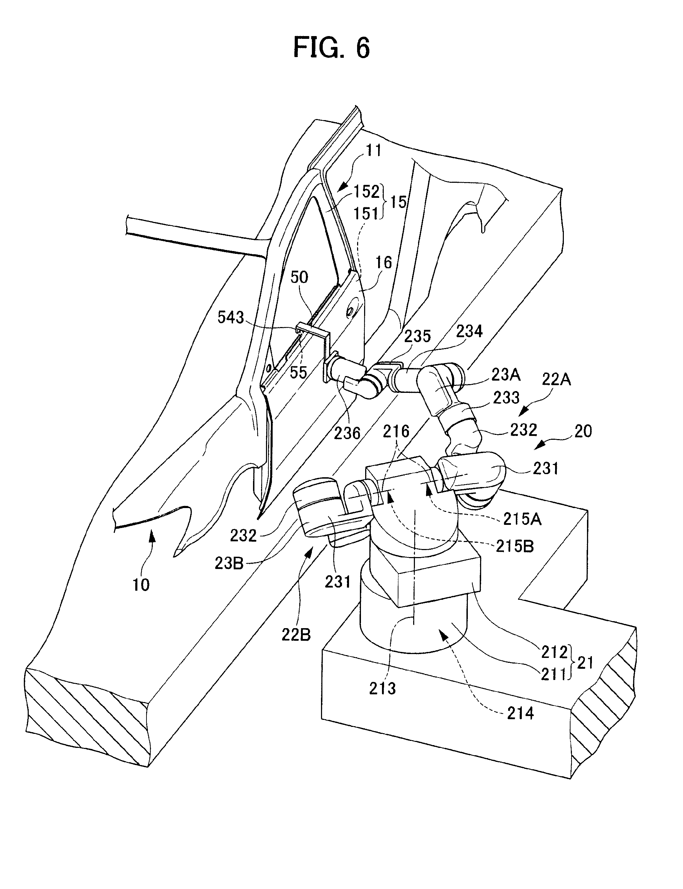

More specifically, as shown in FIG. 6, the first manipulator 22A is driven to insert the door opening pin 55 of the first gripping tool 50 in the gap between the upper edge of the outer panel 16 of the door 11 and the upper edge of the panel main body 151 of the inner panel 15, while the third shock-absorbing portion 543 of the latching part 52 is made to latch to the upper edge of the panel main body 151 of the inner panel 15, and the door 11 is pulled toward outside of the body 10. In this manner, the door 11 is opened, and the lower edge of the door 11 is exposed.

In ST4, the door 11 is gripped by the first manipulator 22A and the second manipulator 22B of the double-arm robot 20, based on the position of the door 11 thus measured.

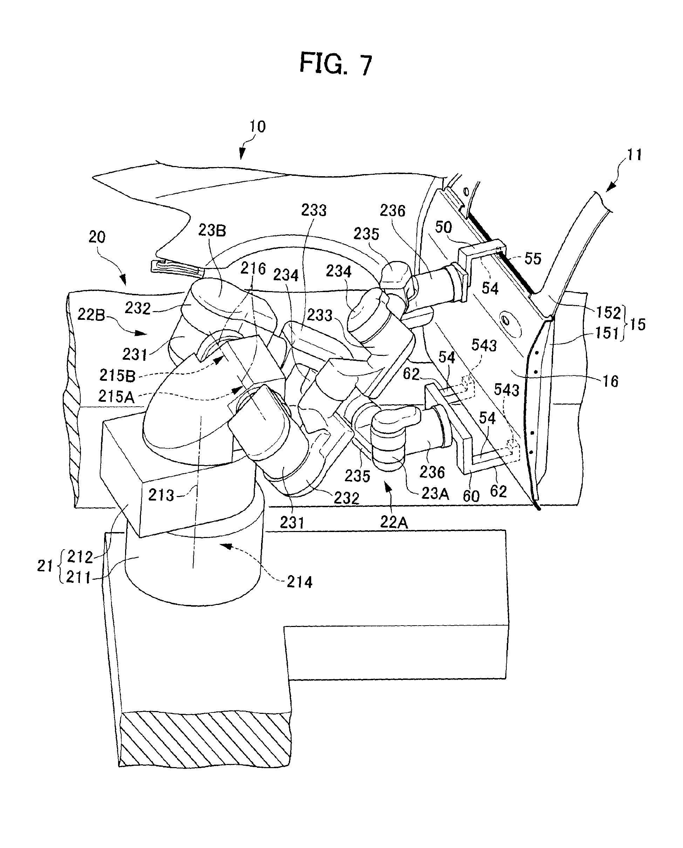

More specifically, as shown in FIG. 7, the second manipulator 22B is driven to cause the third shock-absorbing portions 543 of the latching parts 62 of the second gripping tool 60 to latch to the lower edge of the door 11, while the lower edge of the door 11 is supported by the second shock-absorbing portions 542 of the latching parts 62. Under this situation, the shock-absorbing portion 54 of the first gripping tool 50 and the shock-absorbing portions 54 of the second gripping tool 60 lie opposite to each other, interposing the door 11 in a vertical direction. Subsequently, by causing the first gripping tool 50 and the second gripping tool 60 to approach each other, the door 11 is held by the first manipulator 22A and the second manipulator 22B.

In ST5, the double-arm robot 20 is brought into standby operation while the door 11 is gripped by the first manipulator 22A and the second manipulator 22B of the double-arm robot 20.

On the other hand, in ST13, after the door 11 has been gripped by the double-arm robot 20, the sliding part 211 of the single-arm robot 30 is slid, and the manipulator 32 is moved to a position to loosen a bolt 12.

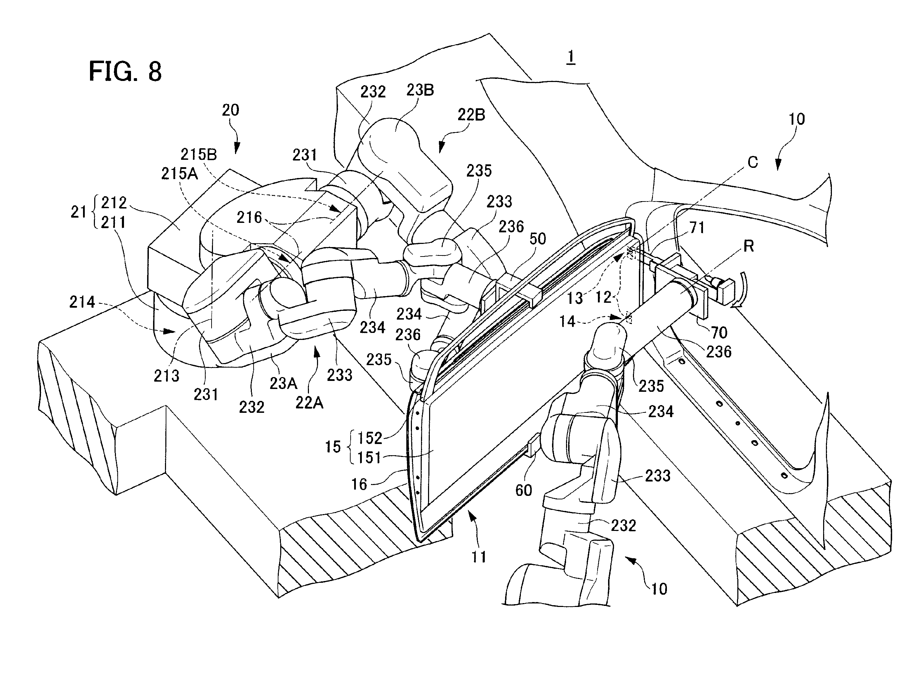

In S 14, based on the position of the door 11 measured, the socket of the nut runner 71 is fitted to the bolts 12 of the hinge members 13 and 14, and the nut runner 71 is driven, thereby loosening and removing the upper and lower bolts 12, as shown in FIG. 8. Herein, removal is performed in the sequence of the bolts of the upper hinge member 13, and the bolts of the lower hinge member 14.

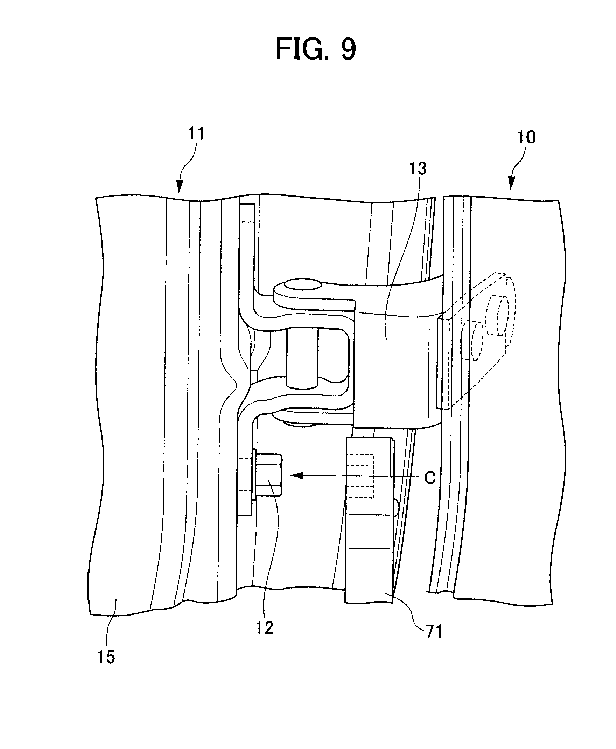

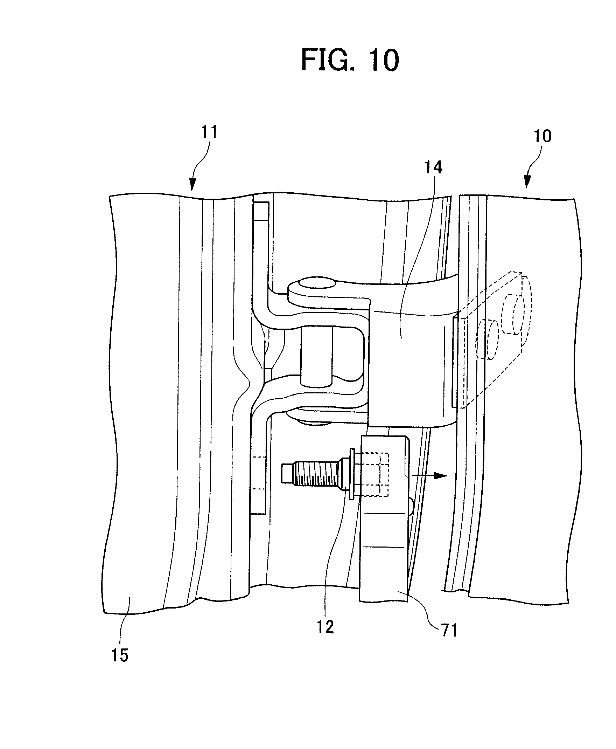

More specifically, as shown in FIG. 9, the socket 711 of the nut runner 71 is fitted to a bolt 12. Herein, the socket 711 is rotated slightly relative to the rotational axis R of the end flange surface 34 of the arm 33. At the same time, the arm 33 is controlled to press the socket 711 in a direction of the central axis R of the end flange surface 34, while rendering the socket 711 to be in a free floating state in a W-axis direction (refer to FIG. 3), which is a longitudinal direction of the nut runner 71. In this manner, the socket 711 is made to be compliant to displacement of the bolt 12. Thereafter, as shown by an arrow in FIG. 8, by causing the arm 33 to rotate about the rotational axis C of the socket 711 of the nut runner 71, the tightening torque of the bolt 12 within the higher torque range is loosened, and by driving the nut runner 71, the tightening torque of the bolt 12 within the lower torque range is loosened. In this way, the bolts 12 are removed as shown in FIG. 10.

In ST15, the manipulator 32 of the single-arm robot 30 is moved to outside of the path of the door 11 conveyed by the double-arm robot 20, and in ST16, the sliding part 211 of the single-arm robot 30 is slid to return to the original position.

On the other hand, in ST6, it is determined whether the bolts have been disconnected. Herein, the load acting on the second manipulator 22B is detected by the load sensor 215B, and if the detected load is equal to or greater than a predetermined value, it is determined that the door and the body has been disconnected. If the determination is NO, the flow returns to ST5, or if YES, the flow advances to ST7.

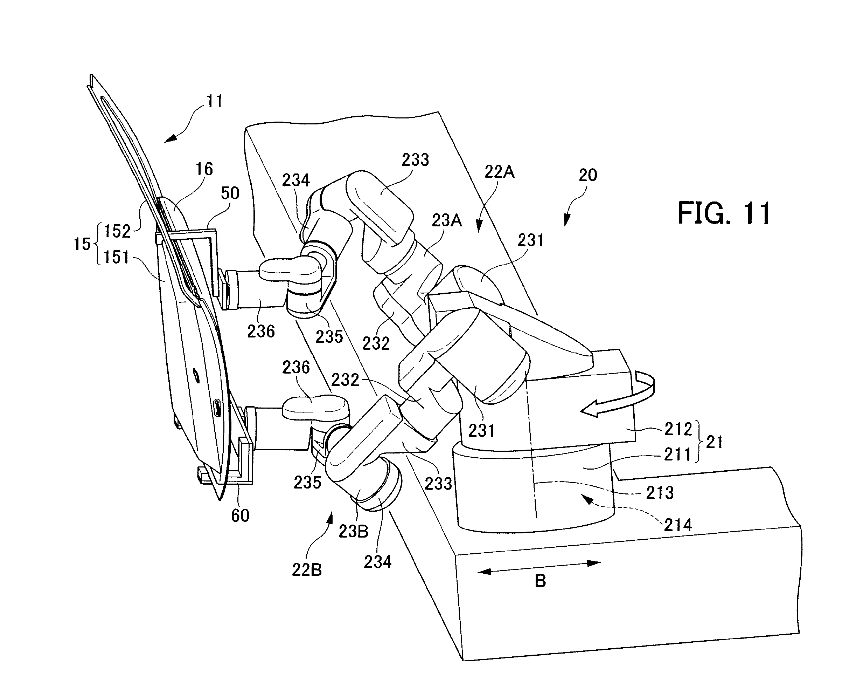

As shown in FIG. 11, In ST7 the pivotal shaft 213 of the double-arm robot 20 is pivoted, while the sliding part 211 of the double-arm robot 20 is slid in the arrow direction B in FIG. 11, so that the double-arm robot 20 conveys the door 11.

Herein, when the pivotal shaft 213 of the double-arm robot 20 is pivoted, the torque acting on the pivotal shaft 213 is detected by the torque sensor 214. If the detected torque is equal to or greater than a predetermined value, the double-arm robot 20 is stopped pivoting.

In ST8, the door 11 is placed on a pallet by the double-arm robot 20, and in ST 9, the sliding part 211 of the double-arm robot is slid to return to the original position.

There are the following effects according to the present embodiment.
(1) Since one door 11 is held and conveyed by the pair of manipulators 22A and 22B of the double-arm robot 20, the door removing system 1 can be reduced in size compared to a conventional case of gripping by a single arm. Therefore, it is possible to not only reduce the space occupied by the door removing system 1, but also increase the versatility of the robots 20 and 30.
   In addition, since the door 11 is gripped by the double-arm robot 20 holding the door 11 from above and below, the gripping tool mounted to the double-arm robot 20 may be any structure that can sandwich the door even if the shape and structure of the door differs for models. In this manner, it is possible to allow a gripping tool to be simply configured such as the first gripping tool 50 and the second gripping tool 60, thereby reducing the cost. In addition, the cycle time can be shortened as a result of reducing the number of times switching and adjusting the gripping tools.
(2) When the double-arm robot 20 is pivoted by the pivotal shaft 213 while the door 11 is gripped by the double-arm robot 20, the torque acting on the pivotal shaft 213 of the double-arm robot 20 is detected by the torque sensor 214. If the detected torque is equal to or greater than the predetermined value, the door 11 is connected to the body 10, with the bolts 12 not being removed. Therefore, the pivoting of the double-arm robot 20 is stopped so as to stop conveyance of the door 11. Accordingly, the door 11 and the body 10 can be prevented from being damaged when the door 11 is removed from the body 10 and conveyed.
(3) It is only when the load detected by the load sensor 215B is equal to or greater than the predetermined value that the door 11 is conveyed by the double-arm robot 20. In this manner, since the door 11 is conveyed only if the connection between the door 11 and the body 10 has been released, the door 11 and the body 10 can be prevented from being damaged.
(4) Among the pair of the upper and the lower bolt 12, the upper bolt 12 is loosened and the lower bolt 12 is loosened subsequently. In this manner, it is possible to reliably determine whether the connection between the door 11 and the body 10 has been released by observing the variation with time of the load acting on the lower manipulator 22B.
(5) By causing the arm 33 of the single-arm robot 30 to rotate about the socket 711 of the nut runner 71, the tightening torque of the bolt 12 within the higher torque range is loosened. Subsequently, the tightening torque of the bolt 12 within the lower torque range is loosened by driving the nut runner. Since it is possible to cause the arm 33 to rotate so as to loosen the part of the tightening torque of the bolt 12 which exceeds the maximum output torque of the nut runner 71, the bolt 12 can be removed, even if the maximum tightening torque of the bolt 12 exceeds the maximum output torque of the nut runner 71.

It should be noted that the present invention is not to be limited to the embodiment, and modifications, improvements, and the like within a scope that can achieve the object of the present invention are included within the present invention.

## Claims

1. A door removing system that removes a door fixed by bolts to a body of an automobile from the body, comprising:
a double-arm robot that holds the door from above and below;
a single-arm robot that removes the bolts; and
control means for performing control for the double-arm robot and the single-arm robot,
wherein while the control means causes a pair of manipulators of the double-arm robot to hold the door from above and below, the control means causes the single-arm robot to remove the bolts, subsequently causing the double-arm robot to convey the door.

2. A door removal system that removes a door fixed by bolts to a body of an automobile from the body, comprising:
a robot configured to grip the door and be pivotable about a pivotal shaft in a substantially vertical direction;
torque detection means for detecting a torque acting on the pivotal shaft; and
control means for controlling the robot,
wherein the control means causes the torque detection means to detect the torque acting on the pivotal shaft when the robot is rotated about the pivotal shaft while the door is being gripped by the robot, and causes the robot to stop rotating for a case where the torque thus detected is equal to or greater than a predetermined value.

3. A door removing method of removing a door fixed by bolts to a body of an automobile from the body, the method comprising:
a step of holding and gripping the door from above and below by way of a pair of manipulators of a double-arm robot;
a step of loosening the bolts; and
a step of detecting a load acting on one among the pair of manipulators that supports a lower side of the door, and conveying the door by way of the double-arm robot only for a case where the load thus detected is equal to or greater than a predetermined value.

4. The door removing method according to claim 3,
wherein the door is fixed to the body by a pair of an upper bolt and a lower bolt, and
wherein the upper bolt is loosened and then the lower bolt is loosened among the pair of the upper bolt and the lower bolt in the step of loosening the bolts.

5. A bolt removing method of removing bolts installed to a work by way of a robot having a robot arm, and a nut runner mounted to an end of the robot arm, the method comprising:
a step of fitting a socket of the nut runner to a bolt;
a step of causing the robot arm to rotate about the socket of the nut runner so as to loosen a tightening torque of the bolt within a higher torque range; and
a step of driving the nut runner to loosen the tightening torque of the bolt within a lower torque range.
